# EUROPEAN PATENT SPECIFICATION

(11) **EP 4 432 493 B1**
(45) Date of publication and mention of the grant of the patent: **12.11.2025**
(21) Application number: 21963333.6
(22) Date of filing: 08.11.2021
(51) Int. Cl.: H02B 13/035

(54) **ARC-EXTINGUISHING CHAMBER, VACUUM BREAKER, AND METHOD FOR ASSEMBLING ARC-EXTINGUISHING CHAMBER**
LICHTBOGENLÖSCHKAMMER, VAKUUMSCHALTER UND VERFAHREN ZUR MONTAGE DER LICHTBOGENLÖSCHKAMMER
CHAMBRE D'EXTINCTION D'ARC, DISJONCTEUR À VIDE ET PROCÉDÉ D'ASSEMBLAGE DE CHAMBRE D'EXTINCTION D'ARC

(43) Date of publication of application: 18.09.2024
(73) Proprietor: MITSUBISHI ELECTRIC CORPORATION, Chiyoda-ku Tokyo 100-8310 (JP)
(72) Inventor: KITANO, Gembu, Tokyo 100-8310 (JP); SATO, Motohiro, Tokyo 100-8310 (JP)
(74) Representative: Witte, Weller & Partner Patentanwälte mbB
(86) International application number: PCT/JP2021/040985
(87) International publication number: WO 2023/079740

(56) References cited:
- WO-A1-2010/134442
- WO-A1-2012/063501
- JP-A- 2013 055 738
- JP-A- 2013 058 312

## Description

### Field

The present disclosure relates to an arc extinguishing chamber including a bellows, a vacuum circuit breaker, and a method of assembling the arc extinguishing chamber.

### Background

A vacuum circuit breaker has an arc extinguishing chamber that includes a vacuum interrupter and in which a contact point is opened or closed. The vacuum interrupter includes: a vacuum container having a tubular shape; a stationary-side lead mounted inside the vacuum container; a movable-side lead passing through an end of the vacuum container; and a bellows connecting the movable-side lead and the vacuum container to each other. The inside of the vacuum container is under vacuum. A movable contact point is provided at an end of the movable-side lead, and a stationary contact point is provided at an end of the stationary-side lead. The movable-side lead moves in an axial direction of the vacuum container, so that a closed state, in which the movable contact point and the stationary contact point are in contact with each other, and an open state, in which the movable contact point and the stationary contact point are separated from each other, are switched.

The bellows extends and contracts in accordance with the movement of the movable-side lead, so that the closed state and the open state are switched while the inside of the vacuum container is kept under vacuum.

Patent Literature 1 discloses a vacuum circuit breaker in which a movable-side conductor disposed in a bushing has a pipe shape, a space inside the movable-side conductor and a space inside the bellows are communicated to each other, and the space inside the bellows is opened to the atmosphere through the space inside the movable-side conductor, so that an air pressure in the space inside the bellows is set to atmospheric pressure.

### Citation List

### Patent Literature

Patent Literature 1: Japanese Patent Application Laid-open No. 2007-306701.

Document JP 2013 058312 A discloses a device according to the preamble of claim 1.

### Summary of Invention

### Problem to be solved by the Invention

The larger the difference between; an air pressure in the space, inside the vacuum container but outside the bellows; and the air pressure in the space inside the bellows, the more the bellows repeats extension and contraction in a centrally bulging state, and the lower the durability of the bellows becomes. In the vacuum circuit breaker disclosed in Patent Literature 1, the air pressure in the space inside the bellows is constantly atmospheric pressure, making it difficult to reduce the central bulging of the bellows and enhance the durability of the bellows.

The present disclosure has been made in view of the above, and an object of the present disclosure is to obtain an arc extinguishing chamber with improved durability of a bellows.

### Means to Solve the Problem

In order to solve the above-mentioned problems and achieve the object, an arc extinguishing chamber according to the present disclosure includes a vacuum interrupter including: a movable contact point and a stationary contact point; a movable lead electrically connected to the movable contact point; a stationary lead electrically connected to the stationary contact point; a vacuum container accommodating the movable contact point, the stationary contact point, and the stationary lead and from one end of which the movable lead protrudes outward; and a bellows that connects the vacuum container and the movable lead to each other, extends in a closed state in which the movable contact point and the stationary contact point are in contact with each other, and contracts in an open state in which the movable contact point and the stationary contact point are separated from each other. The arc extinguishing chamber includes: a contact case having a tubular shape and made of a conductive material; a contact fixed to an end of the movable lead, disposed inside a tube of the contact case, and electrically connecting the contact case and the movable lead to each other; a seal rod that is connected to the movable lead and moves the movable lead; and a movable-side support having a cylinder shape with a bottom surface in which a hole through which the seal rod passes is formed. An air pressure inside a closed space surrounded and sealed by the bellows, the contact case, and the movable-side support is atmospheric pressure in the open state, and is less than atmospheric pressure in the closed state.

### Effects of the Invention

According to the present disclosure, it is possible to achieve an effect that an arc extinguishing chamber with improved durability of a bellows is obtained.

### Brief Description of Drawings

FIG. 1 is a cross-sectional view of a vacuum circuit breaker according to the first embodiment.
FIG. 2 is a cross-sectional view of the vacuum circuit breaker according to the first embodiment.
FIG. 3 is a diagram illustrating a state in which a stationary-side attachment plate is attached to a vacuum interrupter of an arc extinguishing chamber according to the first embodiment.
FIG. 4 is a diagram illustrating a state in which the vacuum interrupter of the arc extinguishing chamber according to the first embodiment is fixed to an assembly jig.
FIG. 5 is a diagram illustrating a state in which a contact case is coupled to the vacuum interrupter of the arc extinguishing chamber according to the first embodiment.
FIG. 6 is a diagram illustrating a state in which a seal rod is coupled to a movable lead of the arc extinguishing chamber according to the first embodiment.
FIG. 7 is a diagram illustrating a state in which a movable-side support is disposed on the movable side of the contact case of the arc extinguishing chamber according to the first embodiment.
FIG. 8 is a cross-sectional view illustrating a state in which an opening jig is attached to an end of the seal rod, on a movable side, of the arc extinguishing chamber according to the first embodiment.
FIG. 9 is a diagram illustrating a state in which a movable contact point and a stationary contact point of the vacuum interrupter of the arc extinguishing chamber according to the first embodiment are separated from each other.
FIG. 10 is a diagram illustrating a state in which the movable-side support and the contact case of the arc extinguishing chamber according to the first embodiment are coupled to each other.
FIG. 11 is a cross-sectional view of the arc extinguishing chamber according to the first embodiment.
FIG. 12 is a cross-sectional view of a vacuum circuit breaker according to a second embodiment.
FIG. 13 is a diagram illustrating a state in which a seal rod is coupled to a movable lead of an arc extinguishing chamber according to the second embodiment.
FIG. 14 is a diagram illustrating a state in which an integrated movable-side support is disposed on the movable side of a vacuum interrupter according to the second embodiment.
FIG. 15 is a cross-sectional view illustrating a state in which an opening jig is attached to an end of a seal rod, on the movable side, of the arc extinguishing chamber according to the second embodiment.
FIG. 16 is a diagram illustrating a state in which a movable contact point and a stationary contact point of the vacuum interrupter of the arc extinguishing chamber according to the second embodiment are separated from each other.
FIG. 17 is a diagram illustrating a state in which the vacuum interrupter of the arc extinguishing chamber and the integrated movable-side support according to the second embodiment are coupled to each other.
FIG. 18 is a cross-sectional view of the arc extinguishing chamber according to the second embodiment.
FIG. 19 is a cross-sectional view of a vacuum circuit breaker according to a third embodiment.

### Description of Embodiments

Hereinafter, an arc extinguishing chamber, a vacuum circuit breaker, and a method of assembling the arc extinguishing chamber will be described in detail with reference to the drawing.

### First Embodiment.

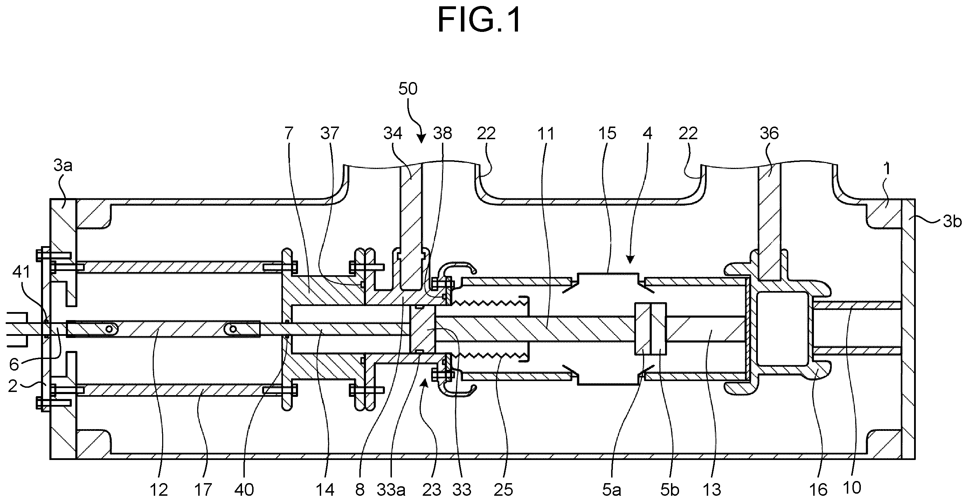

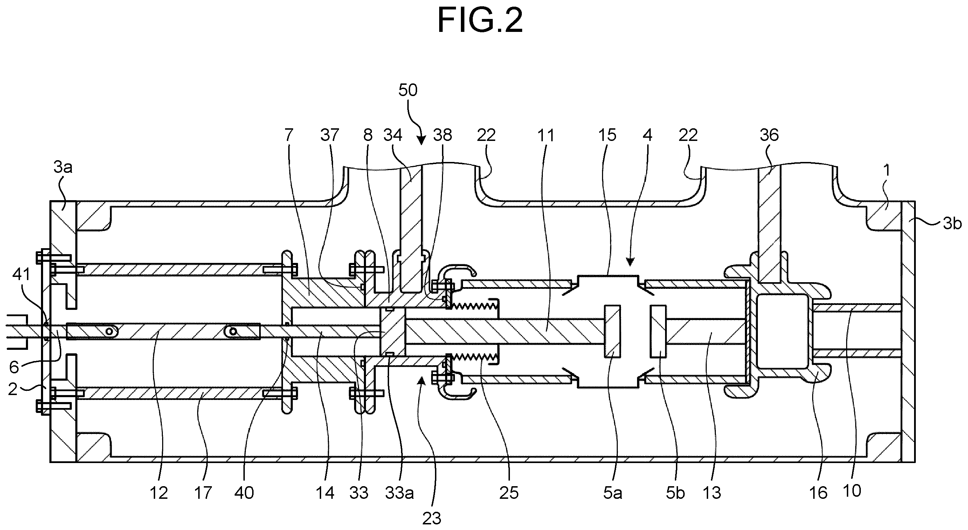

FIGS. 1 and 2 are cross-sectional views of a vacuum circuit breaker according to a first embodiment. In FIG. 1, a vacuum circuit breaker 50 is in a closed state in which a movable contact point 5a and a stationary contact point 5b are in contact with each other. In FIG. 2, the vacuum circuit breaker 50 is in an open state in which the movable contact point 5a and the stationary contact point 5b are separated from each other. As illustrated in FIGS. 1 and 2, the vacuum circuit breaker 50 according to the first embodiment includes: a tank 1 having a tubular shape and is filled with an insulating gas; a vacuum interrupter 4 insulated and supported inside the tank 1 and includes the movable contact point 5a and the stationary contact point 5b; and a movable-side external conductor 34 and a stationary-side external conductor 36 disposed in a pair of bushings 22 that extend upward from the tank 1. In the vacuum circuit breaker 50, the movable contact point 5a is movable, and the open state and the closed state are switched by the movement of the movable contact point 5a. A support plate 3a is mounted on an end of the tank 1 on a movable side, and a support plate 3b is mounted on an end of the tank 1 on a stationary side. The support plate 3a has a disk shape in which a hole is formed at the center. The support plate 3b has a disk shape without a hole. Note that, in an arrangement direction of the movable contact point 5a and the stationary contact point 5b, a direction from the stationary contact point 5b toward the movable contact point 5a is referred to as the "movable side" and a direction from the movable contact point 5a toward the stationary contact point 5b is referred to as the "stationary side".

The vacuum interrupter 4 includes: a movable lead 11; a stationary lead 13; a vacuum container 15 that accommodates the movable lead 11 and the stationary lead 13; and a bellows 25. The vacuum container 15 has a tubular shape. The movable lead 11 is electrically connected to the movable contact point 5a. The movable lead 11 passes through an end of the vacuum container 15 on the movable side, extends to the outside of the vacuum container 15, and reaches the inside of a tube of a contact case 8. The stationary lead 13 is electrically connected to the stationary contact point 5b. The bellows 25 connects the movable lead 11 and the vacuum container 15 to each other.

Furthermore, the vacuum circuit breaker 50 includes: the contact case 8 that electrically connects a lower end of the movable-side external conductor 34 to the movable lead 11; a movable-side support 7 that supports the contact case 8; a stationary-side support 16 that electrically connects a lower end of the stationary-side external conductor 36 to the stationary lead 13; an insulating rod 12 that is coupled to a shaft 6 of an operating device (not illustrated) mounted outside the tank 1 for operating the movable contact point 5a; a movable-side insulating support tube 17 that supports the movable-side support 7 while insulating the movable-side support 7 from the support plate 3a; and a stationary-side insulating support tube 10 that supports the stationary-side support 16 while insulating the stationary-side support 16 from the support plate 3b. The contact case 8 electrically connects a lower end of the movable-side external conductor 34 to the movable lead 11. The movable-side support 7 supports the contact case 8. The stationary-side support 16 electrically connects a lower end of the stationary-side external conductor 36 to the stationary lead 13. The insulating rod 12 is coupled to a shaft 6 of an operating device (not illustrated) mounted outside the tank 1 for operating the movable contact point 5a. The movable-side insulating support tube 17 causes the support plate 3a to support the movable-side support 7 while insulating the movable-side support 7 from the support plate 3a. The stationary-side insulating support tube 10 causes the support plate 3b to support the stationary-side support 16 while insulating the stationary-side support 16 from the support plate 3b.

The hole in the support plate 3a is covered with a lid 2 in which a hole through which the shaft 6 passes is formed. A sliding seal 41 is disposed on an inner peripheral surface of the hole in the lid 2. An arc extinguishing chamber 23 formed by coupling the movable-side support 7, the contact case 8, and the vacuum interrupter 4 is accommodated in the tank 1. The arc extinguishing chamber 23 includes: the vacuum interrupter 4; the contact case 8; a contact 33; a seal rod 14; and the movable-side support 7. The vacuum interrupter 4 is fixed to both the movable-side insulating support tube 17 and the stationary-side support 16.

A driving force of the operating device (not illustrated) is transmitted to the movable contact point 5a via the shaft 6, the insulating rod 12, and the movable lead 11. The movable contact point 5a is configured to take the closed state, in which the movable contact point 5a is in contact with the stationary contact point 5b, or the open state, in which the movable contact point 5a is separated from the stationary contact point 5b, by receiving the driving force of the operating device (not illustrated).

The contact case 8 has a tubular shape and is made of a conductive material. The contact 33 is mounted inside the tube of the contact case 8. The contact 33 is a conductive column. A ring-shaped spring 33a is mounted on an outer peripheral surface of the contact 33. The outer peripheral surface is in contact with an inner peripheral surface of the contact case 8. The contact 33 is fixed to the movable lead 11 by the seal rod 14 screwed into an end of the movable lead 11. The seal rod 14 passes through a hole formed in a bottom surface of the movable-side support 7, and is connected to the insulating rod 12. The bottom surface is an end face of the movable-side support 7 on the movable side. The movable-side external conductor 34 is electrically conductive to the movable lead 11 via the contact case 8 and the contact 33. The movable-side support 7 has a cylinder shape with the bottom surface in which the hole through which the seal rod 14 passes is formed. A sliding seal 40 is disposed in the hole in the bottom surface of the movable-side support 7. The movable-side support 7 may be made of an insulating material, or may be made of a conductive material.

A sealing member 38 is disposed between the vacuum interrupter 4 and the contact case 8. Furthermore, a sealing member 37 is disposed between the contact case 8 and the movable-side support 7. Furthermore, the sliding seal 40 is disposed in the hole in the bottom surface of the movable-side support 7. Therefore, a space surrounded by the bellows 25, the contact case 8, and the movable-side support 7 is a sealed closed space. The air pressure in the closed space is atmospheric pressure in the open state in which the bellows 25 contracts the most, and is equal to or less than atmospheric pressure in the closed state in which the bellows 25 extends. Due to the extension of the bellows 25, the air pressure in the closed space decreases to approximately 85% to 90% of atmospheric pressure.

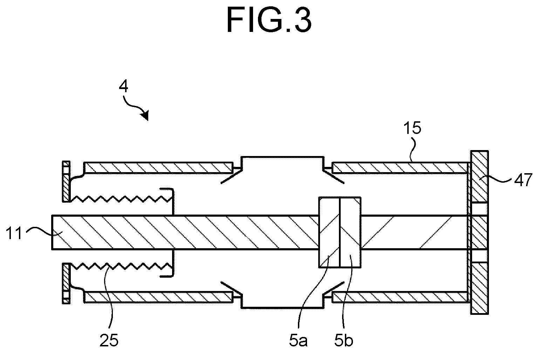

Next, an assembly procedure of the arc extinguishing chamber 23 will be described. First, a stationary-side attachment plate 47 is attached to an end of the vacuum interrupter 4 on the stationary side. FIG. 3 is a diagram illustrating a state in which a stationary-side attachment plate is attached to the vacuum interrupter of the arc extinguishing chamber according to the first embodiment. The stationary-side attachment plate 47 is attached to the vacuum interrupter 4 by making use of screw holes formed in an end face of the vacuum container 15 on the stationary side for fixing to the stationary-side support 16. The inside of the vacuum container 15 is in a vacuum state, so that the bellows 25 extends due to atmospheric pressure, maintaining the closed state in which the movable contact point 5a and the stationary contact point 5b are in contact with each other.

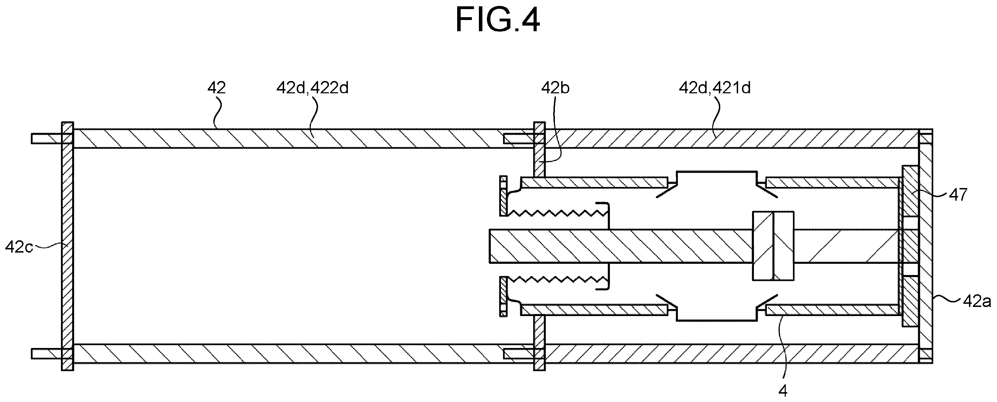

Next, the vacuum interrupter 4 to which the stationary-side attachment plate 47 has been attached is fixed to an assembly jig 42. FIG. 4 is a diagram illustrating a state in which the vacuum interrupter of the arc extinguishing chamber according to the first embodiment is fixed to an assembly jig. The assembly jig 42 includes a fixing plate 42a, an intermediate frame 42b, a movable-side frame 42c, and a coupling rod 42d. The fixing plate 42a, the intermediate frame 42b, and the movable-side frame 42c are coupled to each other by the coupling rod 42d. The coupling rod 42d can be divided into a first coupling rod 421d between the fixing plate 42a and the intermediate frame 42b and a second coupling rod 422d between the intermediate frame 42b and the movable-side frame 42c. The intermediate frame 42b is sandwiched between the first coupling rod 421d and the second coupling rod 422d. Note that the following procedure is performed in a state in which the assembly jig 42 is erected so that the fixing plate 42a is positioned downward.

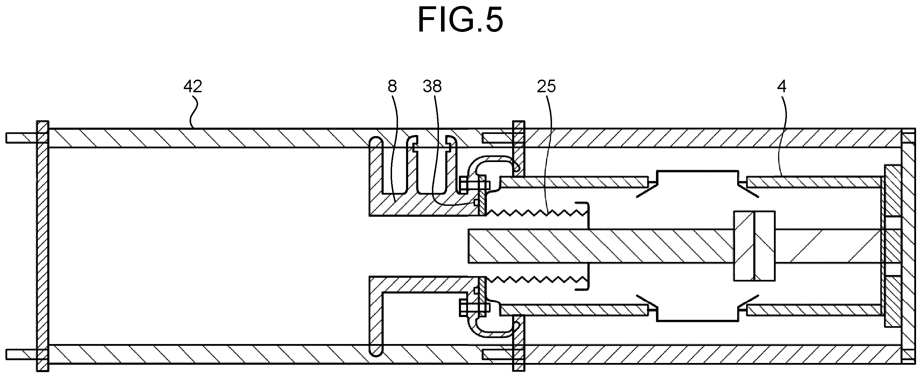

Next, the contact case 8 is coupled to an end of the vacuum interrupter 4 on the movable side. FIG. 5 is a diagram illustrating a state in which a contact case is coupled to the vacuum interrupter of the arc extinguishing chamber according to the first embodiment. The contact case 8 is coupled to the end of the vacuum interrupter 4 on the movable side with the sealing member 38 interposed therebetween. Therefore, a space inside the tube of the contact case 8 and a space inside the bellows 25 communicate with each other.

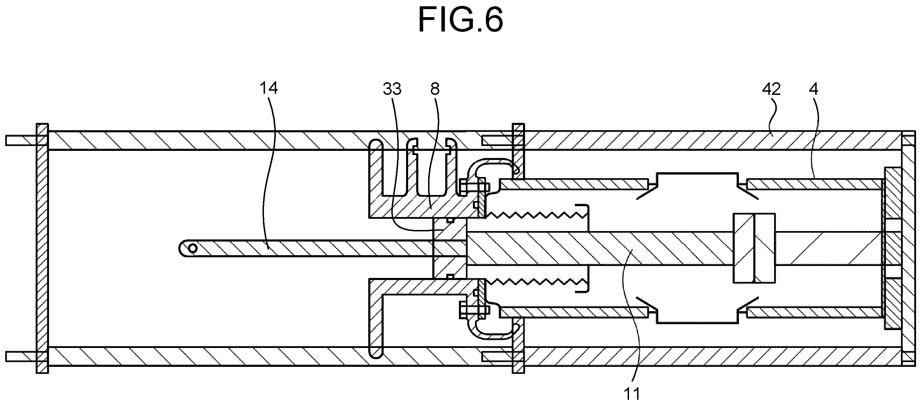

Next, the contact 33 is disposed at the end of the movable lead 11 on the movable side, and the seal rod 14 is coupled to the movable lead 11. FIG. 6 is a diagram illustrating a state in which a seal rod is coupled to the movable lead of the arc extinguishing chamber according to the first embodiment. The seal rod 14 is fitted into a hole formed at the center of the contact 33 and is fixed to the contact 33.

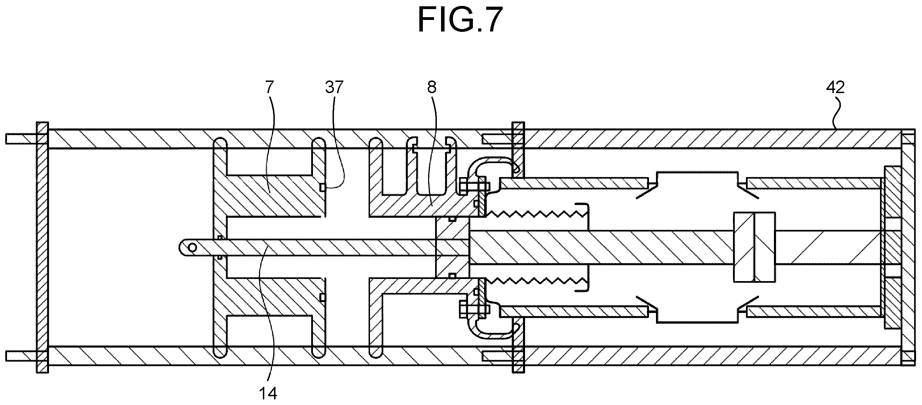

Next, the movable-side support 7 is disposed on the movable side of the contact case 8. FIG. 7 is a diagram illustrating a state in which a movable-side support is disposed on the movable side of the contact case of the arc extinguishing chamber according to the first embodiment. The seal rod 14 is made to pass through the hole in the bottom surface of the movable-side support 7. A gap is formed between the movable-side support 7 and the contact case 8.

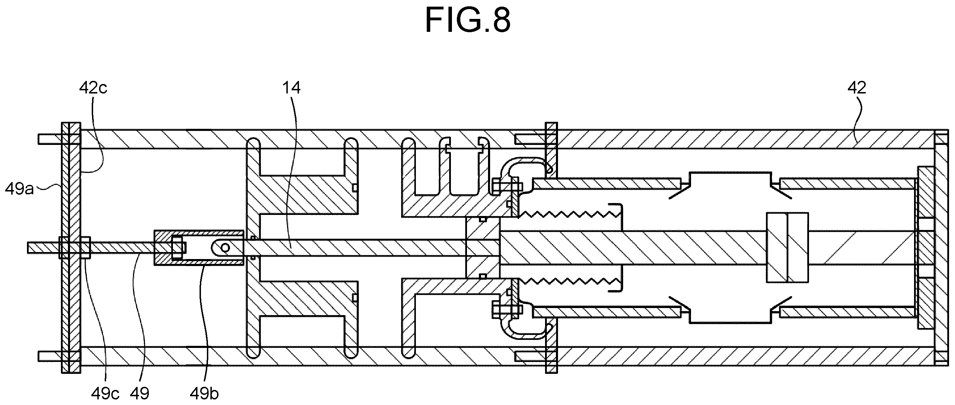

Next, an opening jig 49 is mounted on the movable-side frame 42c of the assembly jig 42, and is attached to an end of the seal rod 14 on the movable side. FIG. 8 is a cross-sectional view illustrating a state in which an opening jig is attached to the end of the seal rod, on the movable side, of the arc extinguishing chamber according to the first embodiment. The opening jig 49 includes: a jig fixing portion 49a fixed to the assembly jig 42; a rod fixing portion 49b fixed to the seal rod 14; and a jack portion 49c configured to adjust the distance between the jig fixing portion 49a and the rod fixing portion 49b. The jig fixing portion 49a is bridged over the movable-side frame 42c of the assembly jig 42.

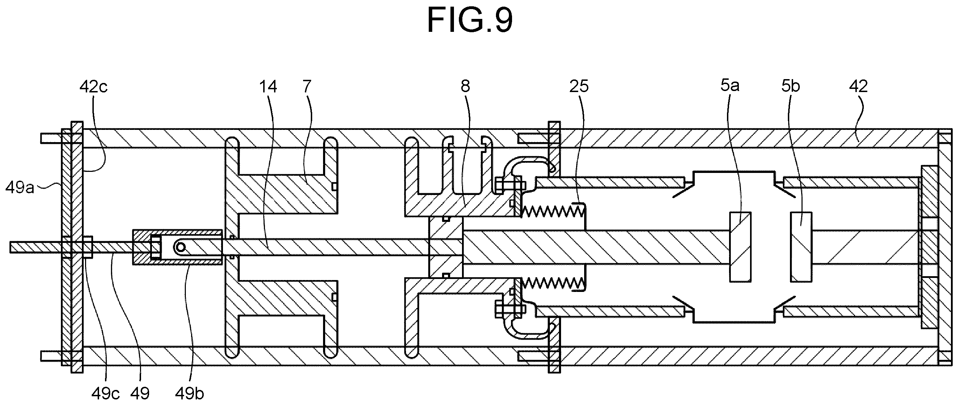

The rod fixing portion 49b of the opening jig 49 is attached to the end of the seal rod 14 on the movable side. Thereafter, the rod fixing portion 49b is pulled toward the jig fixing portion 49a by the jack portion 49c. FIG. 9 is a diagram illustrating a state in which the movable contact point and the stationary contact point of the vacuum interrupter of the arc extinguishing chamber according to the first embodiment are separated from each other. The vacuum inside the vacuum container 15 overcomes a force that causes the bellows 25 to extend, causing the bellows 25 to contract. As a result, the vacuum interrupter 4 takes the open state in which the movable contact point 5a and the stationary contact point 5b are separated from each other. Due to the gap formed between the contact case 8 and the movable-side support 7, an air pressure in the space inside the bellows 25 remains atmospheric pressure even if the bellows 25 contracts.

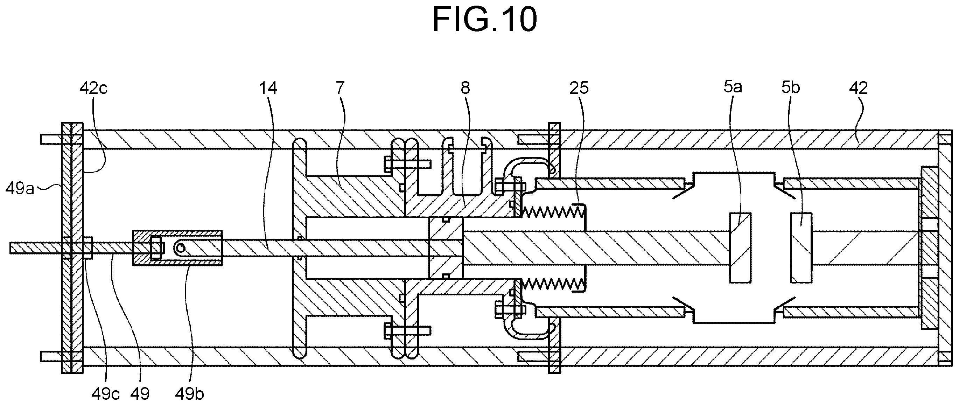

Thereafter, the movable-side support 7 and the contact case 8 are coupled to each other while the vacuum interrupter 4 is maintained in the open state. FIG. 10 is a diagram illustrating a state in which the movable-side support and the contact case of the arc extinguishing chamber according to the first embodiment are coupled to each other. By coupling the movable-side support 7 and the contact case 8 while maintaining the vacuum interrupter 4 in the open state, the space surrounded by the bellows 25, the contact case 8, and the movable-side support 7 becomes a closed space at atmospheric pressure, in the open state.

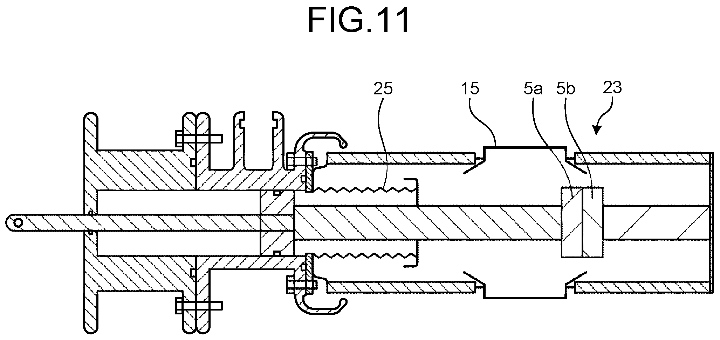

Thereafter, the opening jig 49, the assembly jig 42, and the stationary-side attachment plate 47 are removed from the assembled arc extinguishing chamber 23. FIG. 11 is a cross-sectional view of the arc extinguishing chamber according to the first embodiment. By removing the opening jig 49, the assembly jig 42, and the stationary-side attachment plate 47, a force that causes the bellows 25 to contract is eliminated, and the bellows 25 is extended due to the vacuum inside the vacuum container 15. As a result, the vacuum interrupter 4 takes the closed state in which the movable contact point 5a and the stationary contact point 5b are in contact with each other. As the bellows 25 extends, the air pressure in the closed space surrounded by the bellows 25, the contact case 8, and the movable-side support 7 becomes less than atmospheric pressure.

A procedure of incorporating the arc extinguishing chamber 23 into the tank 1 is similar to that of a general vacuum circuit breaker. Therefore, detailed description thereof will be omitted.

In the arc extinguishing chamber 23 of the vacuum circuit breaker 50 according to the first embodiment, the air pressure in the space inside the bellows 25 is atmospheric pressure in the open state in which the bellows 25 contracts. Therefore, the air pressure in the space inside the closed space surrounded by the bellows 25, the contact case 8, and the movable-side support 7 is less than atmospheric pressure in the closed state in which the bellows 25 extends. Accordingly, in the arc extinguishing chamber 23, the air pressure in the space inside the closed space surrounded by the bellows 25, the contact case 8, and the movable-side support 7 is constantly equal to or less than atmospheric pressure. On the other hand, in an arc extinguishing chamber in which the air pressure in the closed space surrounded by the bellows, the contact case, and the movable-side support is atmospheric pressure in a closed state, when the bellows contracts, the air pressure in the closed space surrounded by the bellows, the contact case, and the movable-side support exceeds atmospheric pressure. The larger the difference between; an air pressure in the space inside the vacuum container 15 but outside the bellows 25; and the air pressure in the closed space surrounded by the bellows 25, the contact case 8, and the movable-side support 7, the more the bellows 25 repeats extension and contraction in a centrally bulging state, and the lower the durability of the bellows 25 becomes. Therefore, in the arc extinguishing chamber 23 of the vacuum circuit breaker 50 according to the first embodiment, the durability of the bellows 25 is higher as compared with the arc extinguishing chamber in which the air pressure in the closed space surrounded by the bellows, the contact case, and the movable-side support is atmospheric pressure in the closed state.

### Second Embodiment.

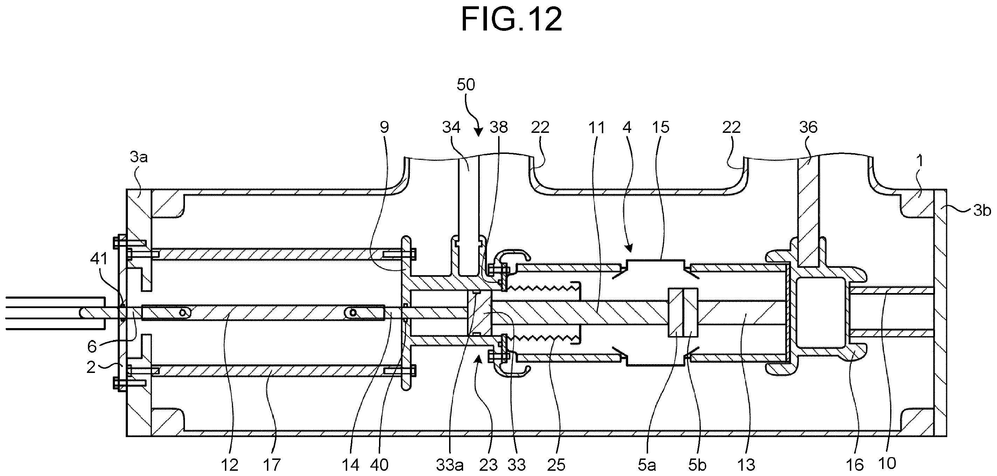

FIG. 12 is a cross-sectional view of a vacuum circuit breaker according to a second embodiment. The vacuum circuit breaker 50 according to the second embodiment is different from the vacuum circuit breaker 50 according to the first embodiment in that the vacuum circuit breaker 50 includes an integrated movable-side support 9 instead of the contact case 8 and the movable-side support 7. The integrated movable-side support 9 has a shape in which the contact case 8 and the movable-side support 7 of the vacuum circuit breaker 50 according to the first embodiment are integrated.

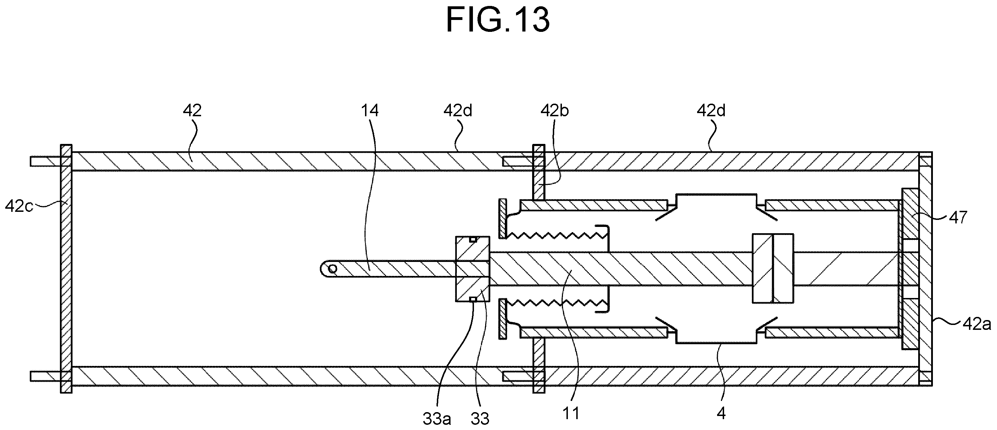

An assembly procedure of the arc extinguishing chamber 23 will be described. First, as in the first embodiment, the stationary-side attachment plate 47 is attached to the end of the vacuum interrupter 4 on the stationary side, and further, the vacuum interrupter 4 to which the stationary-side attachment plate 47 has been attached is fixed to the assembly jig 42. Then, the contact 33 is disposed at the end of the movable lead 11 on the movable side, and the seal rod 14 is coupled to the movable lead 11. FIG. 13 is a diagram illustrating a state in which a seal rod is coupled to the movable lead of the arc extinguishing chamber according to the second embodiment. As in the first embodiment, an assembly jig having a structure including the fixing plate 42a, the intermediate frame 42b, the movable-side frame 42c, and the coupling rod 42d are used as the assembly jig 42.

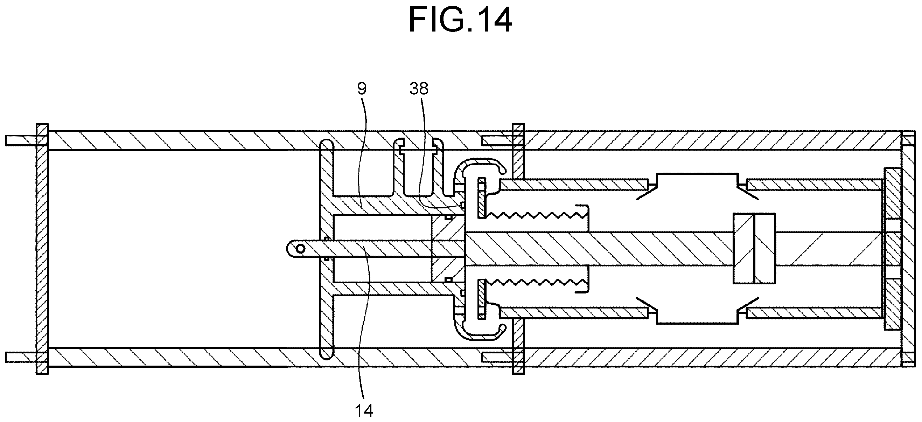

Next, the integrated movable-side support 9 is disposed on the movable side of the vacuum interrupter 4. FIG. 14 is a diagram illustrating a state in which an integrated movable-side support is disposed on the movable side of the vacuum interrupter according to the second embodiment. The seal rod 14 is made to pass through a hole in a bottom surface of the integrated movable-side support 9. A gap is formed between the vacuum interrupter 4 and the integrated movable-side support 9.

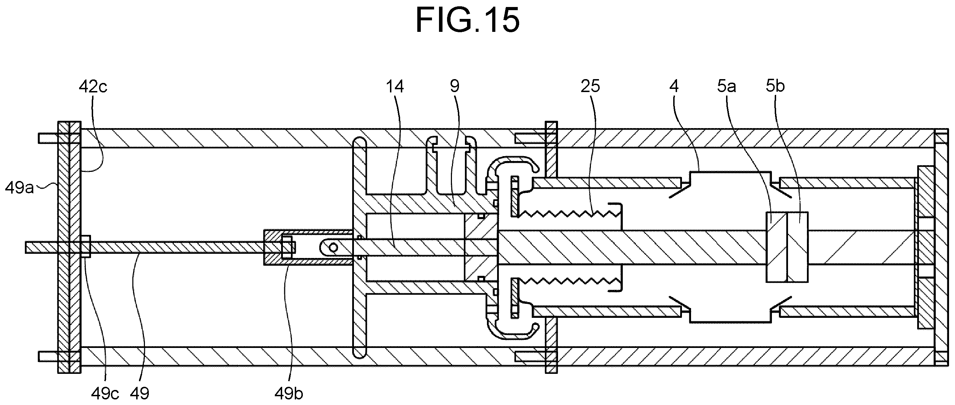

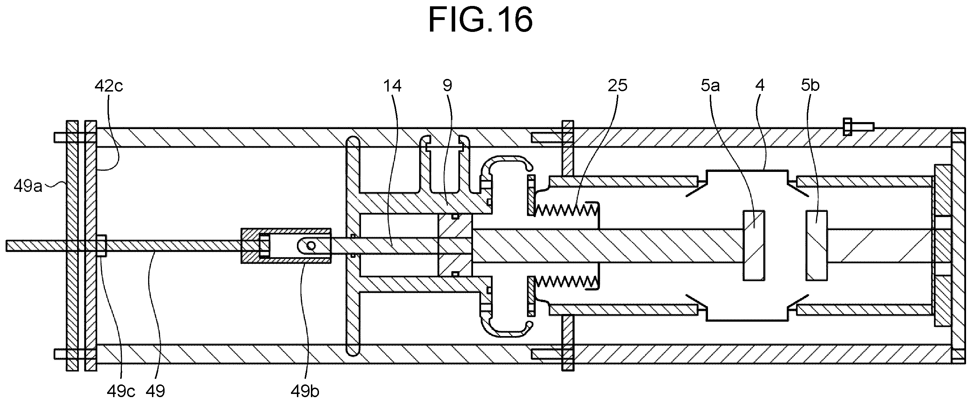

Next, the opening jig 49 is mounted on the movable-side frame 42c of the assembly jig 42, and is attached to the end of the seal rod 14 on the movable side. FIG. 15 is a cross-sectional view illustrating a state in which an opening jig is attached to the end of the seal rod, on the movable side, of the arc extinguishing chamber according to the second embodiment. As in the first embodiment, an opening jig having a structure including the jig fixing portion 49a, the rod fixing portion 49b, and the jack portion 49c are used as the opening jig 49. The rod fixing portion 49b of the opening jig 49 is attached to the end of the seal rod 14 on the movable side. Thereafter, the rod fixing portion 49b is pulled toward the jig fixing portion 49a by the jack portion 49c. FIG. 16 is a diagram illustrating a state in which the movable contact point and the stationary contact point of the vacuum interrupter of the arc extinguishing chamber according to the second embodiment are separated from each other. Due to the gap formed between the vacuum interrupter 4 and the integrated movable-side support 9, the air pressure in the space inside the bellows 25 remains atmospheric pressure even if the bellows 25 contracts.

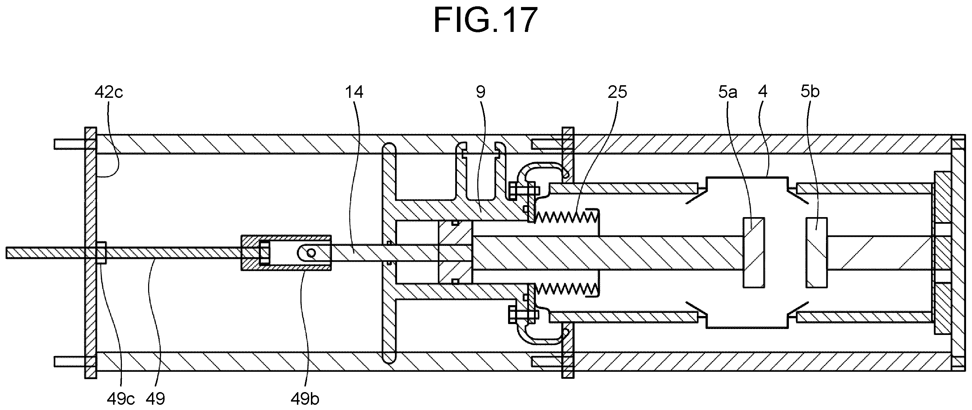

Thereafter, the vacuum interrupter 4 and the integrated movable-side support 9 are brought into contact with each other while the vacuum interrupter 4 is maintained in the open state. By bringing the vacuum interrupter 4 and the integrated movable-side support 9 into contact with each other, the gap formed between the vacuum interrupter 4 and the integrated movable-side support 9 disappears. Thereafter, the vacuum interrupter 4 and the integrated movable-side support 9 are coupled to each other while the vacuum interrupter 4 is maintained in the open state. FIG. 17 is a diagram illustrating a state in which the vacuum interrupter of the arc extinguishing chamber and the integrated movable-side support according to the second embodiment are coupled to each other. By coupling the vacuum interrupter 4 and the integrated movable-side support 9 while maintaining the vacuum interrupter 4 in the open state, the space surrounded by the bellows 25 and the integrated movable-side support 9 becomes a closed space at atmospheric pressure, in the open state.

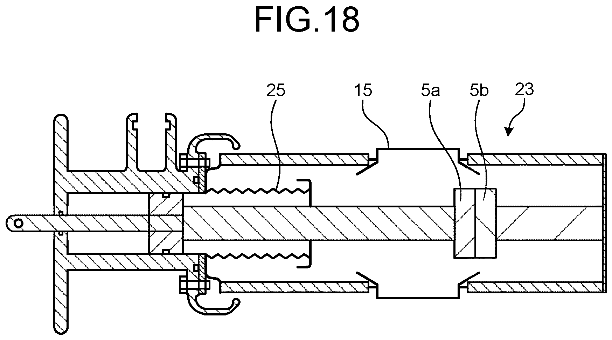

Thereafter, the opening jig 49, the assembly jig 42, and the stationary-side attachment plate 47 are removed from the assembled arc extinguishing chamber 23. FIG. 18 is a cross-sectional view of the arc extinguishing chamber according to the second embodiment. By removing the opening jig 49, the assembly jig 42, and the stationary-side attachment plate 47, the force that causes the bellows 25 to contract is eliminated, and the bellows 25 is extended due to the vacuum inside the vacuum container 15. As a result, the vacuum interrupter 4 takes the closed state in which the movable contact point 5a and the stationary contact point 5b are in contact with each other. As the bellows 25 extends, the air pressure in the closed space surrounded by the bellows 25 and the integrated movable-side support 9 becomes less than atmospheric pressure.

The procedure of incorporating the arc extinguishing chamber 23 into the tank 1 is similar to that of a general vacuum circuit breaker. Therefore, detailed description thereof will be omitted.

In the arc extinguishing chamber 23 of the vacuum circuit breaker 50 according to the second embodiment, the air pressure in the space inside the bellows 25 is atmospheric pressure in the open state in which the bellows 25 contracts. Therefore, the air pressure in the space inside the closed space surrounded by the bellows 25 and the integrated movable-side support 9 is less than atmospheric pressure in the closed state in which the bellows 25 extends. Accordingly, in the arc extinguishing chamber 23, the air pressure in the space inside the closed space surrounded by the bellows 25 and the integrated movable-side support 9 is constantly equal to or less than atmospheric pressure. On the other hand, in an arc extinguishing chamber in which the air pressure in the closed space surrounded by the bellows and the integrated movable-side support is atmospheric pressure in a closed state, when the bellows contracts, the air pressure in the closed space surrounded by the bellows and the integrated movable-side support exceeds atmospheric pressure. The larger the difference between; the air pressure in the space inside the vacuum container 15 but outside the bellows 25; and the air pressure in the closed space surrounded by the bellows 25 and the integrated movable-side support 9, the more the bellows 25 repeats extension and contraction in a centrally bulging state, and the lower the durability of the bellows 25 becomes. Therefore, in the arc extinguishing chamber 23 of the vacuum circuit breaker 50 according to the second embodiment, the durability of the bellows 25 is high as compared with the arc extinguishing chamber in which the air pressure in the closed space surrounded by the bellows and the integrated movable-side support is atmospheric pressure in the closed state.

### Third Embodiment.

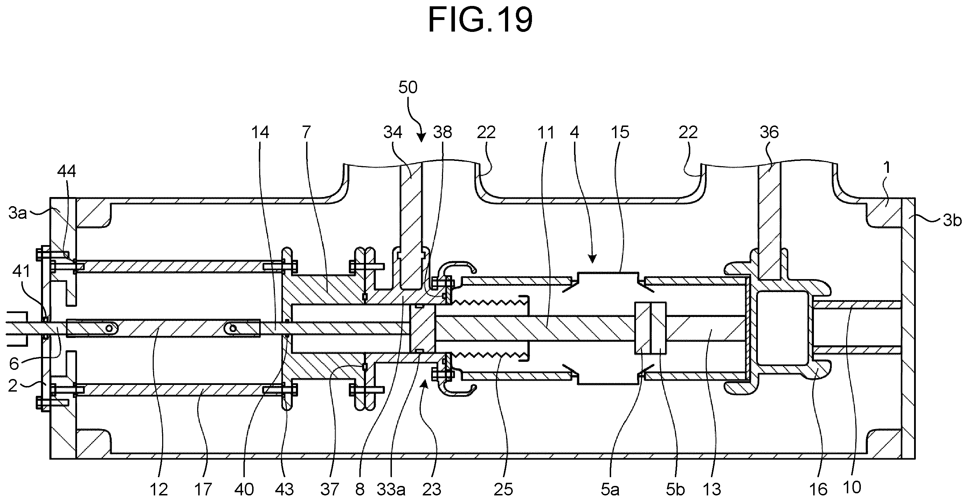

FIG. 19 is a cross-sectional view of a vacuum circuit breaker according to a third embodiment. In the vacuum circuit breaker 50 according to the third embodiment, a sealing member 43 is disposed between the movable-side insulating support tube 17 and the movable-side support 7, and a sealing member 44 is disposed between the movable-side insulating support tube 17 and the support plate 3a. A space inside the movable-side insulating support tube 17 is isolated from a space inside the tank 1 and outside the arc extinguishing chamber 23. The air pressure in the space inside the movable-side insulating support tube 17 is lower than the air pressure in the space inside the tank 1 and outside the arc extinguishing chamber 23. Furthermore, the air pressure in the space inside the movable-side insulating support tube 17 is higher than the air pressure in the space inside the closed space surrounded by the bellows 25, the contact case 8, and the movable-side support 7. Note that a gas in the space inside the movable-side insulating support tube 17 may be of the same type as the insulating gas filled in the space inside the tank 1 and outside the arc extinguishing chamber 23, or may be a different gas.

In the vacuum circuit breaker 50 according to the first embodiment, sealing members are not disposed between the movable-side insulating support tube 17 and the movable-side support 7, and the movable-side insulating support tube 17 and the support plate 3a. In such a vacuum circuit breaker 50, the air pressure inside and outside the movable-side insulating support tube 17 is the same. Therefore, due to the difference in pressure between the insulating gas filled in the tank 1 and the vacuum inside the closed space surrounded by the bellows 25, the contact case 8, and the movable-side support 7, a force is constantly applied to the sliding seal 40 disposed in the hole in the bottom surface of the movable-side support 7. As a result, when the seal rod 14 slides, the insulating gas inside the movable-side insulating support tube 17 easily enters the closed space surrounded by the bellows 25, the contact case 8, and the movable-side support 7. In the vacuum circuit breaker 50 according to the third embodiment, the air pressure in the space inside the movable-side insulating support tube 17 is lower than the air pressure inside the tank 1 and outside the arc extinguishing chamber 23. Therefore, even when the seal rod 14 slides, the gas hardly enters the closed space surrounded by the bellows 25, the contact case 8, and the movable-side support 7 from between the sliding seal 40 and the seal rod 14. Accordingly, a state in which the bellows 25 is less likely to centrally bulge can be maintained for a long period, so that the durability of the bellows 25 can be enhanced.

### Reference Signs List

1 tank; 2 lid; 3a, 3b support plate; 4 vacuum interrupter; 5a movable contact point; 5b stationary contact point; 6 shaft; 7 movable-side support; 8 contact case; 9 integrated movable-side support; 10 stationary-side insulating support tube; 11 movable lead; 12 insulating rod; 13 stationary lead; 14 seal rod; 15 vacuum container; 16 stationary-side support; 17 movable-side insulating support tube; 22 bushing; 23 arc extinguishing chamber; 25 bellows; 33 contact; 33a spring; 34 movable-side external conductor; 36 stationary-side external conductor; 37, 38, 43, 44 sealing member; 40, 41 sliding seal; 42 assembly jig; 42a fixing plate; 42b intermediate frame; 42c movable-side frame; 42d coupling rod; 47 stationary-side attachment plate; 49 opening jig; 49a jig fixing portion; 49b rod fixing portion; 49c jack portion; 50 vacuum circuit breaker; 421d first coupling rod; 422d second coupling rod.

## Claims

1. An arc extinguishing chamber (23) comprising:
a vacuum interrupter (4) including:
a movable contact point (5a) and a stationary contact point (5b);
a movable lead (11) electrically connected to the movable contact point (5a);
a stationary lead (13) electrically connected to the stationary contact point (5b);
a vacuum container (15) accommodating the movable contact point (5a), the stationary contact point (5b), and the stationary lead (13) and from one end of which the movable lead (11) protrudes outward; and
a bellows (25) connecting the vacuum container (15) and the movable lead (11) to each other, the bellows (25) configured to extend in a closed state in which the movable contact point (5a) and the stationary contact point (5b) are in contact with each other, and configured to contract in an open state in which the movable contact point (5a) and the stationary contact point (5b) are separated from each other;
a contact case (8) having a tubular shape and made of a conductive material;
a contact (33) fixed to an end of the movable lead (11), disposed inside a tube of the contact case (8), and electrically connecting the contact case (8) and the movable lead (11) to each other;
a seal rod (14) connected to the movable lead (11) and configured to move the movable lead (11); and
a movable-side support (7) having a cylinder shape with a bottom surface in which a hole through which the seal rod (14) passes is formed, **characterised in that**
an air pressure inside a closed space surrounded and sealed by the bellows (25), the contact case (8), and the movable-side support (7), so as not to cause inflow and outflow of a gas accompanying extension and contraction of the bellows (25), is atmospheric pressure in the open state, and is less than atmospheric pressure in the closed state.

2. The arc extinguishing chamber (23) according to claim 1, wherein the contact case (8) and the movable-side support (7) are integrated.

3. A vacuum circuit breaker (50) comprising:
a tank (1) accommodating an arc extinguishing chamber (23) according to claim 1 or 2, and filled with an insulating gas;
a movable-side external conductor (34) and a stationary-side external conductor (36) that are disposed in a pair of bushings (22) extending upward from the tank (1);
a stationary-side support (16) electrically connecting the stationary-side external conductor (36) to the stationary lead (13);
a movable-side insulating support tube (17) causing the tank (1) to support the movable-side support (7) while insulating the movable-side support (7) from the tank (1); and
a stationary-side insulating support tube (10) causing the tank (1) to support the stationary-side support (16) while insulating the stationary-side support (16) from the tank (1), wherein
a lower end of the movable-side external conductor (34) is connected to the contact case (8).

4. The vacuum circuit breaker (50) according to claim 3, wherein
an air pressure inside a tube of the movable-side insulating support tube (17) is lower than an air pressure in a space inside the tank (1) and outside the arc extinguishing chamber (23), and higher than an air pressure in the closed space.

5. A method of assembling an arc extinguishing chamber (23) according to claim 1, comprising:
a vacuum interrupter (4) including:
a movable contact point (5a) and a stationary contact point (5b);
a movable lead (11) electrically connected to the movable contact point (5a);
a stationary lead (13) electrically connected to the stationary contact point (5b);
a vacuum container (15) accommodating the movable contact point (5a), the stationary contact point (5b), and the stationary lead (13) and from one end of which the movable lead (11) protrudes outward; and
a bellows (25) connecting the vacuum container (15) and the movable lead (11) to each other, the bellows (25) configured to extend in a closed state in which the movable contact point (5a) and the stationary contact point (5b) are in contact with each other, and configured to contract in an open state in which the movable contact point (5a) and the stationary contact point (5b) are separated from each other;
a contact case (8) having a tubular shape and made of a conductive material;
a contact (33) fixed to an end of the movable lead (11), disposed inside a tube of the contact case (8), and electrically connecting the contact case (8) and the movable lead (11) to each other;
a seal rod (14) connected to the movable lead (11) and configured to cause the movable lead (11) to move; and
a movable-side support (7) having a cylinder shape with a bottom surface in which a hole through which the seal rod (14) passes is formed, the method comprising
a step of coupling the contact case (8) and the movable-side support (7) in the open state.

## Patentansprüche

1. Lichtbogenlöschkammer (23), die aufweist:
einen Vakuumunterbrecher (4), der umfasst:
einen beweglichen Kontaktpunkt (5a) und einen stationären Kontaktpunkt (5b);
eine bewegliche Leitung (11), die elektrisch mit dem beweglichen Kontaktpunkt (5a) verbunden ist;
eine stationäre Leitung (13), die elektrisch mit dem stationären Kontaktpunkt (5b) verbunden ist;
einen Vakuumbehälter (15), der den beweglichen Kontaktpunkt (5a), den stationären Kontaktpunkt (5b) und die stationäre Leitung (13) aufnimmt und aus dessen einem Ende die bewegliche Leitung (11) nach außen vorsteht; und
einen Balg (25), der den Vakuumbehälter (15) und die bewegliche Leitung (11) miteinander verbindet, wobei der Balg (25) eingerichtet ist, sich in einem geschlossenen Zustand auszudehnen, in welchem der bewegliche Kontaktpunkt (5a) und der stationäre Kontaktpunkt (5b) miteinander in Kontakt stehen, und eingerichtet ist, sich in einem geöffneten Zustand zusammenzuziehen, in welchem der bewegliche Kontaktpunkt (5a) und der stationäre Kontaktpunkt (5b) voneinander getrennt sind;
ein Kontaktgehäuse (8), das eine Rohrform aufweist und das aus einem leitenden Material hergestellt ist;
einen Kontakt (33), der an einem Ende der beweglichen Leitung (11) fixiert ist, der innerhalb eines Rohrs des Kontaktgehäuses (8) angeordnet ist und der das Kontaktgehäuse (8) und die bewegliche Leitung (11) elektrisch miteinander verbindet;
eine Dichtungsstange (14), die mit der beweglichen Leitung (11) verbunden ist und die eingerichtet ist, die bewegliche Leitung (11) zu bewegen; und
eine bewegungsseitige Stütze (7), die eine Zylinderform mit einer Bodenfläche aufweist, in welcher ein Loch ausgebildet ist, durch welches die Dichtungsstange (14) läuft, **dadurch gekennzeichnet, dass**
ein Luftdruck innerhalb eines geschlossenen Raums, der durch den Balg (25), das Kontaktgehäuse (8) und die bewegungsseitige Stütze (7) umgeben und abgedichtet wird, um kein Einströmen und Ausströmen eines Gases zu verursachen, das ein Ausdehnen und Zusammenziehen des Balgs (25) mit sich bringt, ein Atmosphärendruck in dem geöffneten Zustand ist und kleiner als der Atmosphärendruck in dem geschlossenen Zustand ist.

2. Lichtbogenlöschkammer (23) nach Anspruch 1, wobei das Kontaktgehäuse (8) und die bewegungsseitige Stütze (7) integriert sind.

3. Vakuumschutzschalter (50), der aufweist:
einen Tank (1), der eine Lichtbogenlöschkammer (23) gemäß Anspruch 1 oder 2 aufnimmt und der mit einem isolierenden Gas gefüllt ist;
einen bewegungsseitigen externen Leiter (34) und einen stationärseitigen externen Leiter (36), die in einem Paar aus Buchsen (22) angeordnet sind, die sich von dem Tank (11) nach oben erstrecken;
eine stationärseitige Stütze (16), die den stationärseitigen externen Leiter (36) der stationären Leitung (13) elektrisch verbindet;
ein bewegungsseitiges Isolierstützrohr (17), das den Tank (1) die bewegungsseitige Stütze (7) stützen lässt, während die bewegungsseitige Stütze (7) gegenüber dem Tank (1) isoliert ist; und
ein stationärseitiges Isolierstützrohr (10), das den Tank (1) die stationärseitige Stütze (16) stützen lässt, während die stationärseitige Stütze (16) gegenüber dem Tank (1) isoliert ist, wobei
ein unteres Ende des bewegungsseitigen externen Leiters (34) mit dem Kontaktgehäuse (8) verbunden ist.

4. Vakuumschutzschalter (50) nach Anspruch 3, wobei
ein Luftdruck innerhalb eines Rohrs des bewegungsseitigen Isolierstützrohrs (17) kleiner als ein Luftdruck in einem Raum innerhalb des Tanks (1) und außerhalb der Lichtbogenlöschkammer (23) ist und größer als ein Luftdruck in dem geschlossenen Raum ist.

5. Verfahren zum Zusammenbauen einer Lichtbogenlöschkammer (23) nach Anspruch 1, die aufweist:
einen Vakuumunterbrecher (4), der umfasst:
einen beweglichen Kontaktpunkt (5a) und einen stationären Kontaktpunkt (5b);
eine bewegliche Leitung (11), die elektrisch mit dem beweglichen Kontaktpunkt (5a) verbunden ist;
eine stationäre Leitung (13), die elektrisch mit dem stationären Kontaktpunkt (5b) verbunden ist;
einen Vakuumbehälter (15), der den beweglichen Kontaktpunkt (5a), den stationären Kontaktpunkt (5b) und die stationäre Leitung (13) aufnimmt und aus dessen einem Ende die bewegliche Leitung (11) nach außen vorsteht; und
einen Balg (25), der den Vakuumbehälter (15) und die bewegliche Leitung (11) miteinander verbindet, wobei der Balg (25) eingerichtet ist, sich in einem geschlossenen Zustand auszudehnen, in welchem der bewegliche Kontaktpunkt (5a) und der stationäre Kontaktpunkt (5b) in Kontakt miteinander stehen, und eingerichtet ist, sich in einem geöffneten Zustand zusammenzuziehen, in welchem der bewegliche Kontaktpunkt (5a) und der stationäre Kontaktpunkt (5b) voneinander getrennt sind;
ein Kontaktgehäuse (8), das eine Rohrform aufweist und das aus einem leitenden Material hergestellt ist;
einen Kontakt (33), der an einem Ende der beweglichen Leitung (11) fixiert ist, der innerhalb eines Rohrs des Kontaktgehäuses (8) angeordnet ist und der das Kontaktgehäuse (8) und die bewegliche Leitung (11) elektrisch miteinander verbindet;
eine Dichtungsstange (14), die mit der beweglichen Leitung (11) verbunden ist und die eingerichtet ist, zu verursachen, dass sich die bewegliche Leitung (11) bewegt; und
eine bewegungsseitige Stütze (7), die eine Zylinderform mit einer Bodenfläche aufweist, in welcher ein Loch ausgebildet ist, durch welches die Dichtungsstange (14) läuft, wobei das Verfahren aufweist
einen Schritt eines Koppelns des Kontaktgehäuses (8) und der bewegungsseitigen Stütze (7) im geöffneten Zustand.

## Revendications

1. Chambre d'extinction d'arc (23) comprenant :
un interrupteur à vide (4) comportant :
un point de contact mobile (5a) et un point de contact fixe (5b) ;
un conducteur mobile (11) connecté électriquement au point de contact mobile (5a) ;
un conducteur fixe (13) connecté électriquement au point de contact fixe (5b) ;
un récipient à vide (15) logeant le point de contact mobile (5a), le point de contact fixe (5b) et le conducteur fixe (13) et à partir d'une extrémité duquel le conducteur mobile (11) fait saillie vers l'extérieur ; et
un soufflet (25) reliant le récipient à vide (15) et le conducteur mobile (11) l'un à l'autre, le soufflet (25) étant conçu pour s'étendre dans un état fermé dans lequel le point de contact mobile (5a) et le point de contact fixe (5b) sont en contact l'un avec l'autre, et étant conçu pour se contracter dans un état ouvert dans lequel le point de contact mobile (5a) et le point de contact fixe (5b) sont séparés l'un de l'autre ;
un boîtier de contact (8) ayant une forme tubulaire et constitué d'un matériau conducteur ;
un contact (33) fixé à une extrémité du conducteur mobile (11), disposé à l'intérieur d'un tube du boîtier de contact (8), et connectant électriquement le boîtier de contact (8) et le conducteur mobile (11) l'un à l'autre ;
une tige d'étanchéité (14) reliée au conducteur mobile (11) et conçue pour déplacer le conducteur mobile (11) ; et
un support côté mobile (7) ayant une forme cylindrique avec une surface inférieure dans laquelle est formé un trou à travers lequel passe la tige d'étanchéité (14), **caractérisée en ce que**
une pression d'air à l'intérieur d'un espace fermé entouré et rendu étanche par le soufflet (25), le boîtier de contact (8) et le support côté mobile (7), de manière à ne pas provoquer d'entrée ni de sortie d'un gaz accompagnant une extension et une contraction du soufflet (25), est la pression atmosphérique dans l'état ouvert, et est inférieure à la pression atmosphérique dans l'état fermé.

2. Chambre d'extinction d'arc (23) selon la revendication 1, dans laquelle le boîtier de contact (8) et le support côté mobile (7) sont intégrés.

3. Disjoncteur à vide (50) comprenant :
un réservoir (1) contenant une chambre d'extinction d'arc (23) selon la revendication 1 ou 2, et rempli d'un gaz isolant ;
un conducteur externe côté mobile (34) et un conducteur externe côté fixe (36) qui sont disposés dans une paire de douilles (22) s'étendant au-dessus du réservoir (1);
un support côté fixe (16) connectant électriquement le conducteur externe côté fixe (36) au conducteur fixe (13) ;
un tube support isolant côté mobile (17) amenant le réservoir (1) à supporter le support côté mobile (7) tout en isolant le support côté mobile (7) du réservoir (1) ; et
un tube support isolant côté fixe (10) permettant au réservoir (1) de supporter le support côté fixe (16) tout en isolant le support côté fixe (16) du réservoir (1), dans lequel
une extrémité inférieure du conducteur externe côté mobile (34) est reliée au boîtier de contact (8).

4. Disjoncteur à vide (50) selon la revendication 3, dans lequel
une pression d'air à l'intérieur d'un tube du tube de support isolant côté mobile (17) est inférieure à une pression d'air dans un espace à l'intérieur du réservoir (1) et à l'extérieur de la chambre d'extinction d'arc (23), et supérieure à une pression d'air dans l'espace fermé.

5. Procédé permettant d'assembler une chambre d'extinction d'arc (23) selon la revendication 1, comprenant :
un interrupteur à vide (4) comportant :
un point de contact mobile (5a) et un point de contact fixe (5b) ;
un conducteur mobile (11) connecté électriquement au point de contact mobile (5a) ;
un conducteur fixe (13) connecté électriquement au point de contact fixe (5b) ;
un récipient à vide (15) logeant le point de contact mobile (5a), le point de contact fixe (5b) et le conducteur fixe (13) et à partir d'une extrémité duquel le conducteur mobile (11) fait saillie vers l'extérieur ; et
un soufflet (25) reliant le récipient à vide (15) et le conducteur mobile (11) l'un à l'autre, le soufflet (25) étant conçu pour s'étendre dans un état fermé dans lequel le point de contact mobile (5a) et le point de contact fixe (5b) sont en contact l'un avec l'autre, et étant conçu pour se contracter dans un état ouvert dans lequel le point de contact mobile (5a) et le point de contact fixe (5b) sont séparés l'un de l'autre ;
un boîtier de contact (8) ayant une forme tubulaire et constitué d'un matériau conducteur ;
un contact (33) fixé à une extrémité du conducteur mobile (11), disposé à l'intérieur d'un tube du boîtier de contact (8), et connectant électriquement le boîtier de contact (8) et le conducteur mobile (11) l'un à l'autre ;
une tige d'étanchéité (14) reliée au conducteur mobile (11) et conçue pour amener le conducteur mobile (11) à se déplacer ; et
un support côté mobile (7) ayant une forme cylindrique avec une surface inférieure dans laquelle est formé un trou à travers lequel passe la tige d'étanchéité (14), le procédé comprenant
une étape consistant à accoupler le boîtier de contact (8) et le support côté mobile (7) dans l'état ouvert.
